Europäisches Patentamt

European Patent Office

Office européen des brevets

(19)

(11) Numéro de publication : **0 113 267**
**B1**

(12) **FASCICULE DE BREVET EUROPÉEN**

(45) Date de publication du fascicule du brevet :
16.04.86

(51) Int. Cl.⁴ : **H 02 K 41/02, H 02 K 57/00,
B 25 J 11/00, H 01 Q 1/18**

(21) Numéro de dépôt : **83402345.9**

(22) Date de dépôt : **06.12.83**

(54) Convertisseur électromécanique à plusieurs degrés de liberté.

(30) Priorité : **07.12.82 FR 8220450**

(43) Date de publication de la demande :
**11.07.84 Bulletin 84/28**

(45) Mention de la délivrance du brevet :
**16.04.86 Bulletin 86/16**

(84) Etats contractants désignés :
**CH DE FR GB IT LI NL SE**

(56) Documents cités :
**CH-A- 312 381
DE-A- 3 122 695
DE-C- 977 623
FR-A- 674 513
FR-A- 2 040 907
FR-A- 2 180 551
FR-A- 2 198 299
FR-A- 2 325 974
FR-A- 2 419 341
FR-A- 2 452 193
SOVIET INVENTIONS ILLUSTRATED, Derwent,
semaine C01, 13.02.1980**

(73) Titulaire : **ETAT-FRANCAIS représenté par le DELE-
GUE GENERAL POUR L'ARMEMENT
Bureau des Brevets et Inventions de la Délégation
Générale pour l'Armement 14, rue Saint-Dominique
F-75997 Paris Armées (FR)**

(72) Inventeur : **Sabonnadière, Jean-Claude
38bis, Avenue de la Chartreuse
F-38240 Meylan (FR)**
Inventeur : **Foggia, Albert
Le Bourg des Verchères no 9 Dommartin
F-69380 Lozanne (FR)**

Jouve, 18, rue St-Denis, 75001 Paris, France

## Description

La présente invention concerne le problème technique de l'orientation, du déplacement ou du réglage, sur trois degrés de liberté, d'un corps mobile par rapport à une partie ou structure fixe.

L'objet de l'invention vise, plus particulièrement, le problème du positionnement d'un corps quelconque par rapport à un référentiel immobile et elle vise, plus spécialement encore, le problème du réglage de l'orientation d'un corps devant, en outre, pouvoir être mobile en rotation sur un axe susceptible d'adopter une orientation quelconque à l'intérieur d'un angle solide prédéterminé.

L'invention peut faire l'objet de plusieurs applications différentes et être mise en œuvre, notamment, pour les robots, les commandes de structures orientables, telles que les radars, les manipulateurs de l'industrie, les commandes de plateforme de guidage, etc ...

Dans les différents domaines ci-dessus, le problème du réglage, de l'orientation ou du déplacement d'un corps mobile, par rapport à une structure fixe sur plusieurs degrés de liberté, s'effectue en mettant en œuvre un actionneur propre à chaque axe ou degré de liberté concerné. Ceci a pour effet de créer un ensemble lourd, encombrant, onéreux par suite de la multiplication des actionneurs et de leurs moyens de liaison et de commande.

En outre, une telle conception conduit à multiplier les inconvénients dus aux différents actionneurs mis en œuvre et, notamment, aux problèmes de fiabilité qui leur sont attachés.

D'autres propositions, à base de moyens électromagnétiques, ont été formulées pour obvier à ces inconvénients.

On connaît, par exemple, la demande FR-A-2 325 974 visant à régler le problème de la stabilisation d'une structure pendulaire telle qu'une antenne tournant sur un palier sphérique. Selon ce document, il est mis en œuvre deux paires de moteurs linéaires disposés sur deux axes de stabilisation. Ces moteurs de type linéaires coopèrent avec une piste annulaire qu'ils sont chargés d'entraîner ensemble en rotation sur le troisième axe perpendiculaire au premier. Par paires, ces moteurs ont la charge de combattre tout déplacement intempestif sur leur axe d'influence.

Une telle structure apparaît encombrante et peu ou sinon impossible à mettre en œuvre chaque fois qu'il convient d'agir directement sur l'organe mobile, sans disposer d'une structure pendulaire.

On connaît aussi la demande FR-A-2 452 193 visant le même domaine d'application que la présente invention.

Cette demande propose un moteur à deux degrés de liberté comprenant un rotor sphérique associé à deux paires d'inducteurs constitués par des pièces sphériques, séparées, non jointives et tronquées pour délimiter deux calottes sphériques, centrées sur un troisième axe. Ces calottes définissent la plage angulaire conique de débattement du troisième axe.

Pour conférer une possibilité de motorisation sur le troisième axe, cette demande propose d'évider le rotor sur le troisième axe et de disposer un moteur dans un tel évidement. Cette construction implique l'existence d'un moteur indépendant dont le volume et, par conséquent, la puissance, ne peuvent qu'être faibles en raison de son emplacement. Or, c'est justement sur l'axe considéré qu'il convient de disposer des plus grandes possibilités de motorisation.

Cette demande FR-A-2 452 193 propose aussi en variante d'adjoindre à chaque pièce constitutive d'un inducteur un second bobinage s'étendant sensiblement perpendiculairement au premier. Cette proposition, qui ne peut être retenue lorsque la pièce est une masse feuilletée, conduit à produire, lorsqu'elle est massive, des courants de Foucault très élevés préjudiciables au bon fonctionnement du moteur.

Le brevet DE-977 623 montre un dispositif analogue au précédent mais incorporant un moteur électrique supplémentaire pour fournir un troisième degré de liberté. Le troisième moteur est mobile par rapport au support puisque son inducteur et son induit sont montés sur un équipage mobile, ceci réalisant un dispositif lourd dont les parties mobiles ont une forte inertie. Il s'agit donc seulement d'un moteur à un degré de liberté dont le support est stabilisé.

L'objet de l'invention vise à remplacer les différents actionneurs de la technique antérieure par un moyen unique capable de répondre au problème posé, c'est-à-dire d'autoriser un mouvement possible d'un corps mobile par rapport à une référence fixe sur trois degrés de liberté, l'un de ces degrés de liberté représentant un axe de rotation complète du corps mobile, le mouvement sur chaque degré de liberté pouvant être réalisé indépendamment des mouvements sur les deux autres axes.

Un autre objet de l'invention est de prévoir des moyens permettant de réaliser une commande simultanée ou indépendante sur chacun ou plusieurs des degrés de liberté, de façon à provoquer un mouvement résultant qui est directement en rapport avec les composantes individuelles relatives aux degrés de liberté concernés et qui ne soit pas la simple superposition de trois mouvements distincts obtenus par des moteurs distincts mobiles les uns par rapport aux autres.

Un objet supplémentaire de l'invention est de fournir, en outre, des moyens pour apprécier le déplacement, le réglage ou l'orientation du corps mobile par rapport à une référence fixe, de façon à pouvoir déterminer, immédiatement, la position spatiale adoptée à la suite de la commande de déplacement exécutée.

Pour atteindre les buts ci-dessus, l'invention a pour objet un convertisseur électromécanique à trois degrés de liberté, comprenant un corps présentant une surface sphérique, une structure indépendante du corps mais associée à ce dernier par des moyens autorisant un déplacement relatif en rotation sur trois axes autour du centre du corps sphérique, des moyens électromagnétiques interposés entre le corps et la structure comprenant des inducteurs indépendants mais solidaires entre eux et agissant sur un induit unique par application sur cet induit d'un ensemble de flux croisés pour provoquer, sur trois axes indépendants, une rotation relative, totale et réversible sur un axe et partielle et réversible sur les deux autres, entre le corps sphérique et la structure, caractérisé en ce que les moyens électromagnétiques sont constitués par trois inducteurs indépendants correspondant respectivement aux trois axes de rotation.

Diverses autres caractéristiques ressortent de la description faite ci-dessous en référence aux dessins annexés qui montrent, à titre d'exemples non limitatifs, des formes de réalisation de l'objet de l'invention.

La figure 1 est un schéma montrant l'application de l'invention.

La figure 2 est une perspective schématique illustrant, à plus grande échelle, l'objet de l'invention.

La figure 3 est une coupe prise, à plus grande échelle, selon le plan III-III de la fig. 2.

La figure 4 est une vue en plan schématique prise sensiblement selon le plan IV-IV de la fig. 2.

La figure 5 est une vue schématique prise sensiblement selon la ligne V-V de la fig. 4.

La figure 6 montre, plus en détail, un élément constitutif de l'objet de l'invention.

La figure 7 est une coupe prise selon la ligne VII-VII de la figure 5.

La figure 8 est une vue schématique analogue à la figure 1 mais montrant un autre exemple d'application.

Les figures 9 et 10 sont des vues schématiques correspondant à ces coupes diamétrales illustrant deux variantes de réalisation de l'objet de l'invention.

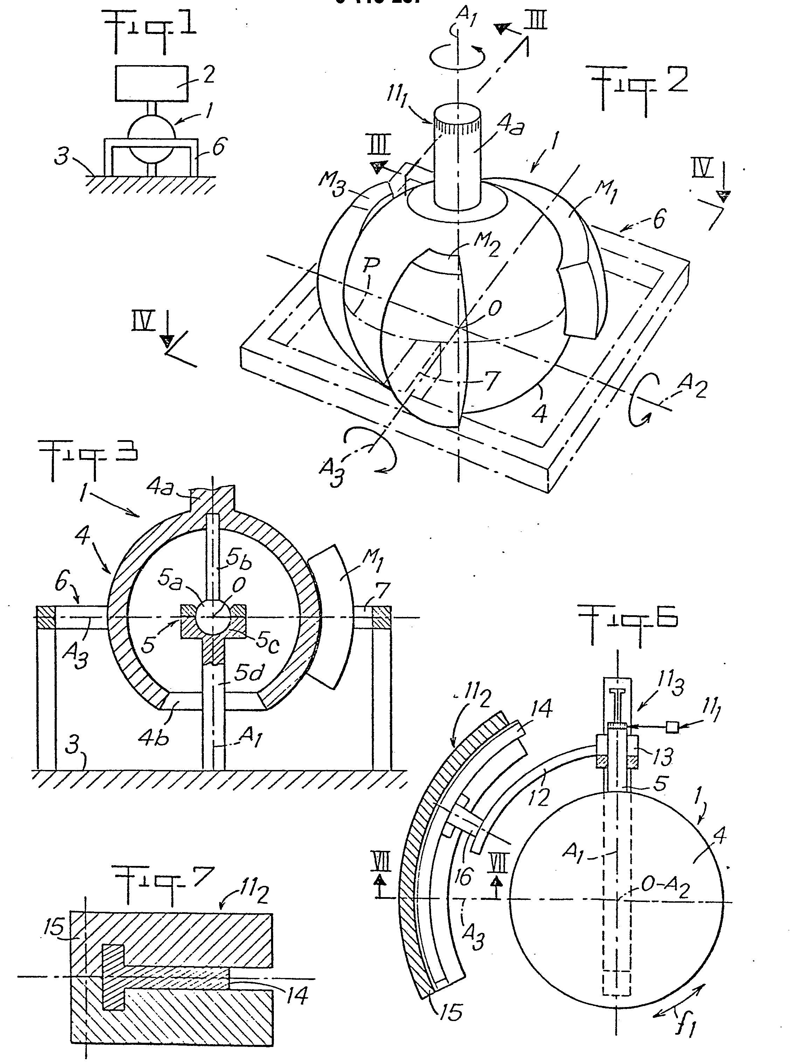

La figure 1 montre, schématiquement, que l'objet de l'invention, désigné dans son ensemble par la référence 1, est destiné à être mis en œuvre pour assurer le déplacement, le réglage ou l'orientation d'un corps mobile 2 quelconque par rapport à un support fixe 3.

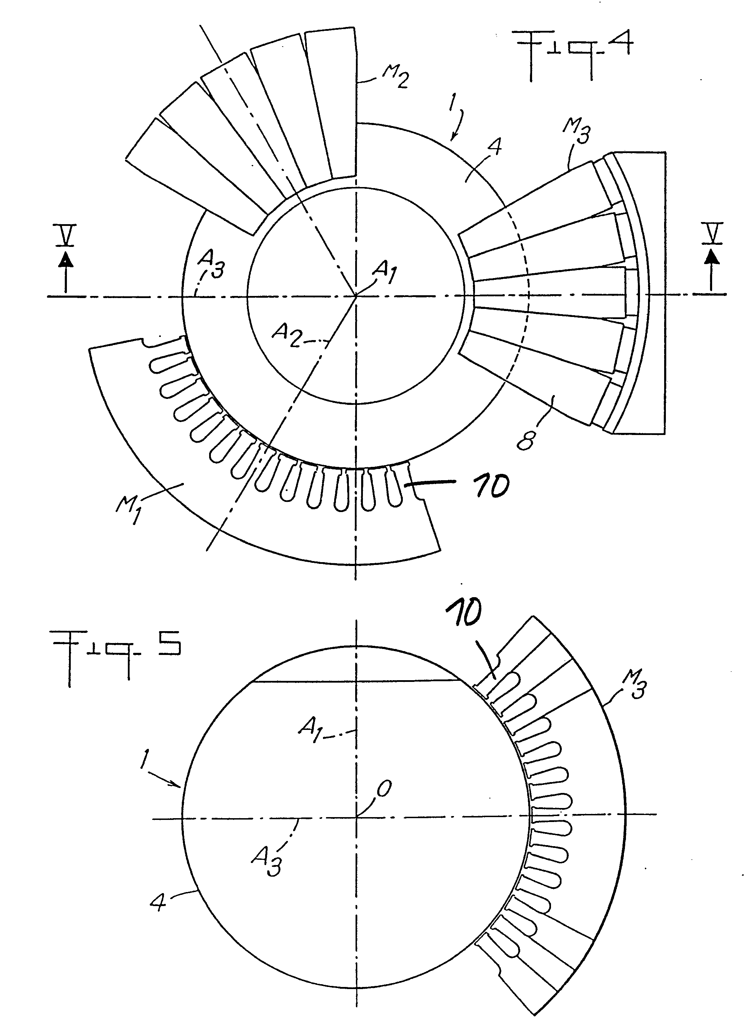

Le dispositif 1 est constitué par un convertisseur électromécanique à plusieurs degrés de liberté représenté, dans sa réalisation selon la figure 2, comme susceptible d'autoriser un déplacement, une orientation ou un réglage selon trois degrés de liberté correspondant à trois axes de rotation. Ces axes ou degrés de liberté sont références $A_1$, $A_2$ et $A_3$, s'intersectant en un point commun O.

Le convertisseur électro-mécanique 1 comprend un corps 4 susceptible d'être relié physiquement à l'appareil 2 par tout moyen convenable tel qu'un prolongement radial 4a matérialisant, de préférence, l'axe $A_1$.

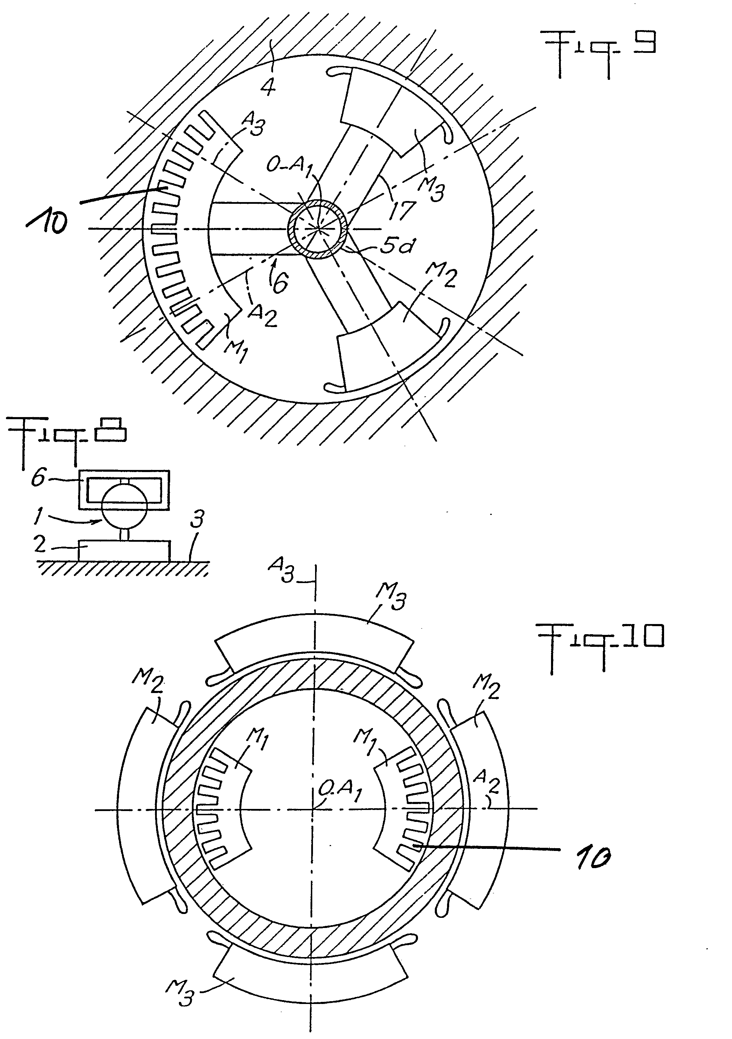

Le corps 4 est monté sur le support 3 par des moyens 5 lui procurant une liberté de déplacement relatif en rotation, au moins partielle, sur trois axes. Dans l'exemple illustré par la figure 3, les moyens 5 sont constitués sous la forme d'un joint universel centré sur le centre O en étant disposé à l'intérieur du corps 4 constitué par un corps creux. Le joint universel comprend une rotule constituée par une pièce sphérique 5a solidaire du corps 4 par une tige radiale 5b. La pièce 5a coopère avec un logement 5c, en deux parties assemblables, prévu à l'extrémité d'un montant 5d s'élevant depuis le support 3 et traversant le corps creux 4 par une ouverture 4b.

La tige 5b et le montant 5d coïncident avec l'axe $A_1$ et confèrent ainsi une possibilité de rotation totale et réversible du corps 4 sur cet axe.

Les moyens 5 pourraient être réalisés différemment et, par exemple, le joint universel pourrait être formé directement par un logement interne au corps 4 réalisé en deux parties assemblables pour permettre le montage et le démontage d'une pièce sphérique portée par le montant.

Une autre façon de réaliser les moyens 5 serait de les constituer par quatre galets portés par une cage solidaire du support 3 et coopérant avec une surface extérieure sphérique du corps 4.

Le convertisseur électromécanique comprend, par ailleurs des moyens électromagnétiques M ou inducteurs destinés à coopérer avec le corps 4. Ces moyens M sont portés par une structure 6 s'élevant à partir du support 3.

La structure 6 peut prendre toute forme particulière correspondant à l'application retenue et n'est représentée, à la figure 2, qu'à titre d'exemple non limitatif sous la forme d'un cadre plan.

Les moyens M sont affectés chacun à un degré de liberté ou à un axe de rotation et portent, pour cette raison les indices 1, 2 et 3 leur correspondant. Les moyens électromagnétiques $M_1$ à $M_3$ sont, de préférence, portés par la structure 6, de manière que leur plan de symétrie corresponde avec le plan diamétral P du corps 4, perpendiculaire à l'axe A et passant par le point ou centre O. A titre d'exemple, la liaison peut être établie par des membrures convenables 7 tenant compte des possibilités de montage et démontage des moyens $M_1$ à $M_3$, ainsi que des obligations spécifiques inhérentes à leur fonctionnement électromagnétique.

Dans l'exemple de réalisation selon les figures 1 à 3, les moyens M sont disposés à l'extérieur du corps 4 qui présente, obligatoirement, une surface extérieure sphérique centrée sur le centre O.

Le moyen électromagnétique $M_1$ est disposé de manière que son plan d'influence corresponde au plan diamétral P alors que les moyens $M_2$ et $M_3$ sont disposés dans deux plans perpendiculaires de telle sorte que le plan d'influence de chacun d'eux soit perpendiculaire au plan P.

De façon plus générale, les inducteurs $M_1$ à $M_3$ sont disposés chacun de telle sorte que leur plan de symétrie longitudinale soit le plan formé par les deux axes autres que celui sur lequel ils agissent.

Plus généralement encore, les moyens $M_1$ à $M_3$ peuvent être disposés dans trois plans distincts n'ayant en commun que le centre de la sphère.

Les moyens électromagnétiques $M_1$ à $M_3$, sont destinés à créer des champs magnétiques radiaux à déplacement tangentiel, de façon à provoquer, chacun dans son plan d'influence, une rotation du corps 4 sur l'axe perpendiculaire à un tel plan. Les moyens M sont constitués de masses feuilletées 8 (fig. 4 et 5) usinées de manière à délimiter, sur leur surface en regard de celle sphérique du corps 4, des dents 10 entre lesquelles sont placés des bobinages.

La construction de ces moyens $M_1$ à $M_3$ doit être considérée comme du domaine de l'homme de métier pour ce qui concerne le choix des épaisseurs et de l'alliage des différentes plaques entrant dans la constitution des masses feuilletées, le choix des isolants les séparant et le choix des caractéristiques des bobinages qui leur sont associés. La seule exigence devant être maintenue est la réalisation de moyens $M_1$ à $M_3$ présentant une surface en portion de surface sphérique qui est, dans le cas présent, concave, de manière à pouvoir délimiter, avec la surface sphérique convexe du corps 4, un entrefer de valeur constante.

Les inducteurs M1 à M3 peuvent être formés d'une entité matérielle unique ainsi que le montrent les modes de réalisation des figures 1 à 9 ou de plusieurs entités séparées comme par exemple le mode de réalisation de la figure 10.

Les trois inducteurs $M_1$, $M_2$, $M_3$ agissent donc indépendamment sur l'induit unique formé par le corps sphérique et par combinaison de trois flux croisés qu'ils appliquent sur l'induit permettent un déplacement du corps 4 par rapport à eux-mêmes ou inversement d'eux-mêmes par rapport au corps 4, selon trois degrés de liberté.

En effet les flux produits par les trois inducteurs, bien que se combinant en agissant sur le même induit, conservent chacun la spécificité de leur action et donc l'indépendance de leurs effets électromécaniques.

De manière à pouvoir établir un couplage électromagnétique entre les moyens $M_1$ à $M_3$ et le corps sphérique 4, il peut être prévu de réaliser ce dernier de plusieurs façons différentes.

Le corps 4 peut présenter une surface extérieure lisse et être réalisé en une matière ferromagnétique massive, en partie au moins en matière ferromagnétique recouverte d'une couche de matière conductrice telle que cuivre ou aluminium ou encore, en une matière amagnétique associée à un revêtement de matière conductrice comme par exemple le cuivre ou l'aluminium.

Le convertisseur électromagnétique représente alors un dispositif moteur asynchrone à réluctance constante.

En associant au dispositif un apport de puissance réactive réalisé par exemple au moyen de condensateurs électriques, reliés électriquement aux sorties des inducteurs $M_1$ à $M_3$ le dispositif peut fonctionner en génératrice asynchrone lors des phases de ralentissement du mouvement du corps sphérique.

Le corps 4 peut aussi présenter des encoches délimitant des plots prévus de manière à réaliser dans chacune des directions, avec les dents magnétiques 10 des moyens inducteurs M, un effet de Vernier électromagnétique. Le corps 4 peut alors être en un matériau ferromagnétique non conducteur, en un matériau ferromagnétique conducteur ou, encore, en un matériau ferromagnétique non conducteur revêtu d'une couche de matière conductrice. Les intervalles entre les plots peuvent être occupés par des aimants et/ou par des bobines de polarisation.

Ces bobines peuvent être alimentées au moyen d'un système bagues-balais.

Le convertisseur électromécanique représente alors un dispositif à couplage synchrone et à réluctance variable, en fonctionnement moteur ou générateur.

Une combinaison de ces deux techniques permet de disposer d'un convertisseur asynchrone synchronisé.

Ceci peut être réalisé notamment en prévoyant soit un corps (4) réalisé en matériau ferromagnétique conducteur encoché revêtu ou non d'une couche conductrice, soit de façon équivalente un corps (4) réalisé en un matériau ferromagnétique non conducteur revêtu d'une couche conductrice, soit le corps (4) réalisé en un matériau ferromagnétique non conducteur, mais comportant des enroulements en court-circuit.

L'alimentation des inducteurs M est associée avec des courants d'intensité variable en fonction du déplacement à obtenir. Une commande pas à pas peut aussi être obtenue dans le cas de construction en dispositif moteur synchrone.

Ainsi, en référence à la figure 2, on conçoit que l'alimentation du moyen électromagnétique $M_1$ permet de faire tourner le corps sphérique 4 par les moyens 5 sur l'axe ou le degré de liberté $A_1$, dans un sens ou dans l'autre, et sur une rotation inférieure, égale ou supérieure à 360°.

L'alimentation du moyen $M_2$ permet de commander la rotation du corps sphérique par les moyens 5 sur l'axe $A_2$ avec une amplitude angulaire correspondant à la liberté de déplacement autorisée, soit par les moyens 5, soit par l'encombrement général que présentent, les moyens $M_1$ à $M_3$. Il est certain que l'alimentation du moyen $M_2$ peut être établie indépendamment ou successivement à celle du moyen $M_1$ lorsqu'il est souhaité entraîner le corps 4 en déplacement indépendant sur chacun des axes ou degrés de liberté ou, encore, en un mouvement résultant correspondant aux actions combinées d'au moins deux déplacements sur deux degrés de liberté.

L'alimentation du moyen $M_3$ permet de faire tourner le corps sphérique 4 par les moyens 5 sur l'axe ou le degré de liberté $A_3$ avec les mêmes conditions que celles correspondant au moteur $M_2$.

Ainsi, le convertisseur électromécanique objet de l'invention, constitué comme décrit ci-dessus, permet, en étant interposé entre un support 3 et un produit, objet du dispositif 2 mobile, de commander le déplacement, l'orientation ou le réglage de position de ce produit en ne faisant intervenir qu'une structure motrice unique dont l'encombrement est limité par rapport aux solutions traditionnelles comportant autant d'actionneurs qu'il existe de degrés de liberté.

Par le moyen de l'invention, il devient ainsi possible de faire tourner le produit ou objet 2 sur l'axe $A_1$, en rotation continue ou non, dans un sens ou dans l'autre, et de régler la position de cet axe à l'intérieur d'un cône défini par un angle solide déterminé par l'amplitude de déplacement susceptible d'être conférée en rotation sur les axes $A_2$ et $A_3$.

Selon un développement de l'invention, il est prévu de faire comporter au convertisseur électromécanique un détecteur 11 de position propre à chacun des degrés de liberté.

Les détecteurs de position $11_2$-$11_3$ correspondant aux axes $A_2$ et $A_3$ peuvent être, par exemple, du type de celui représenté schématiquement aux figures 6 et 7. Selon ces dernières, chaque détecteur 11 comprend un bras 12 qui est monté sur le prolongement 4a par l'intermédiaire d'une bague de rotation 13. Le bras 12 comporte, à son extrémité opposée, une réglette 14 qui est susceptible de coulisser dans une glissière 15 occupant sur la structure 26 une position fixe correspondant au plan d'influence du moyen M auquel le détecteur correspond. La réglette 14 est associée au bras 12 par un pivot 16 dont l'axe est dirigé vers le centre O. La réglette 14 comporte, sur l'une de ses parties constitutives, des fentes de longueur déterminée qui sont destinées à coopérer avec des moyens de lecture, tels que des phototransistors adaptés sur la glissière 15. Les fentes sont échelonnées de manière à pouvoir déterminer, à la fois, l'amplitude et le sens du déplacement à partir d'une position neutre correspondant, par exemple, à un alignement du prolongement 4 avec la verticale.

En référence à la figure 6, on constate que le corps sphérique 4 est libre de rotation sur l'axe A mais que tout déplacement angulaire de cet axe peut ainsi être détecté au moyen des capteurs $11_2$-$11_3$. En effet, si par exemple l'alimentation du moyen électromécanique $M_2$ est assurée pour entraîner la rotation du corps sphérique 4 sur l'axe $A_2$ dans l'un ou l'autre sens de la flèche $F_1$, la réglette 14 se déplace à l'intérieur de la glissière 15 et fournit, par la coopération des fentes et des moyens de lecture, l'information correspondante à distance permettant de détecter l'amplitude ou la nouvelle position atteinte par le corps sphérique 4.

Les informations délivrées par les détecteurs correspondant aux axes $A_2$ et $A_3$ permettent donc de posséder une connaissance exacte de la position spatiale du prolongement 4a et, par conséquent, du produit ou objet 2.

La connaissance de l'orientation sur l'axe $A_1$ est fournie par un détecteur de position $11_3$ correspondant à l'axe $A_1$, constitué par un détecteur de conception classique, tel qu'une roue codée, fixée sur le prolongement 4a et associée à un lecteur optique ou magnétique par exemple fixé sur l'une des bagues 13.

Dans ce qui précède, il est indiqué que, selon la figure 1, le convertisseur électromécanique 1 est interposé entre un support 3 fixe et un produit ou objet 2 mobile. Il doit être considéré que l'objet de l'invention peut également être mis en œuvre pour une disposition inversée consistant à rendre le corps 4 fixe et la structure 6 mobile lorsqu'elle est conçue en tant que plate-forme de montage ou d'adaptation d'ensembles ou de produits divers, comme cela apparaît à la figure 8.

Le fonctionnement décrit ci-dessus intervient, alors de même façon pour produire une rotation relative entre le corps sphérique 4 et la structure 6, dès que l'un quelconque des moyens M est alimenté.

Dans certaines applications, il peut être envisagé de mettre en œuvre le convertisseur électromécanique de l'invention pour des dispositifs pour lesquels l'encombrement, représenté par la structure 6 décrite à la figure 2, peut être rédhibitoire.

Dans un tel cas, comme illustré par la figure 9, les moyens électromagnétiques $M_1$ à $M_3$ peuvent être conçus pour que la surface sphérique qu'ils délimitent soit extérieure et non plus intérieure, de manière à pouvoir coopérer avec une surface sphérique interne du corps creux 4. La structure porteuse des moyens électromagnétiques se présente alors comme une armature, par exemple, à bras 17 rayonnants s'étendant à partir du montant 5d. Les bras rayonnants 17 et le montant 5d sont, de préférence, tubulaires pour assurer l'acheminement et la protection des conducteurs d'alimentation des moyens électromagnétiques M.

Dans cet exemple de réalisation, le corps 4 peut être mobile par rapport à l'armature 6 fixe ou inversement.

La figure 10 montre qu'une disposition mixte peut également être retenue en faisant comporter certains des moyens M à l'intérieur du corps 4 et d'autres moyens à l'extérieur de ce dernier, tout en demeurant tous solidaires sur les plans mécanique et électromagnétique. Ceci peut être le cas, notamment, lorsque chacun des moyens $M_1$ à $M_3$ est formé de deux éléments constitutifs travaillant en couple pour produire le déplacement du corps 4 ou de la structure 6 sur un axe ou un degré de liberté.

Dans ce type de configuration lorsque la surface extérieure du corps mobile (4) est lisse et sa surface intérieure encochée (ou inversement), le convertisseur peut réaliser un mouvement synchrone sur un axe et asynchrone sur les deux autres axes ou réciproquement suivant la répartition interne et externe des moyens électromagnétiques $M_1$ à $M_3$.

Un des avantages, de l'invention est de concentrer les actions électromagnétiques de trois inducteurs sur une structure mobile unique, ce qui permet la suppression, en comparaison des dispositifs existants, d'un certain nombre de liaisons mécaniques, diminuant de ce fait les frottements et les jeux mécaniques.

Un autre avantage de l'invention réside dans le fait que les inducteurs tous solidaires entre eux sont montés sur un seul et même support ce qui permet d'accroître notablement la compacité du dispositif.

## Revendications

1. Convertisseur électromécanique à trois degrés de liberté, comprenant un corps (4) présentant une surface sphérique, une structure (6) indépendante du corps mais associée à ce dernier par des moyens (5) autorisant un déplacement relatif en rotation sur trois axes autour du centre du corps sphérique, des moyens électromagnétiques (M) interposés entre le corps et la structure comprenant des inducteurs indépendants mais solidaires entre eux et agissant sur un induit unique par application sur cet induit d'un ensemble de flux croisés pour provoquer, sur trois axes (A) indépendants, une rotation relative, totale et réversible sur un axe et partielle et réversible sur les deux autres, entre le corps sphérique et la structure, caractérisé en ce que les moyens électromagnétiques sont constitués par trois inducteurs indépendants ($M_1$, $M_2$, $M_3$) correspondant respectivement aux trois axes de rotation ($A_1$, $A_2$, $A_3$).

2. Convertisseur électromécanique selon la revendication 1, caractérisé en ce que les moyens électromagnétiques ($M_1$ à $M_3$) sont tous disposés à l'extérieur du corps sphérique.

3. Convertisseur électromécanique selon la revendication 1, caractérisé en ce que les moyens électromagnétiques ($M_1$ à $M_3$) sont tous disposés à l'intérieur du corps sphérique.

4. Convertisseur électromécanique selon la revendication 1, caractérisé en ce que les moyens électromagnétiques (M) sont disposés à la fois à l'extérieur et à l'intérieur du corps (4) tout en demeurant solidaires sur les plans mécanique et électromagnétique.

5. Convertisseur électromécanique selon l'une des revendications 1 à 4, caractérisé en ce que l'axe de rotation affecté à chaque moyen électromagnétique (M) est associé à un capteur de position (11).

6. Convertisseur électromécanique selon l'une des revendications 1 à 4, caractérisé en ce qu'il comprend un dispositif d'apport de puissance réactive comportant, par exemple, des condensateurs reliés électriquement aux bornes des moyens électromagnétiques ($M_1$ à $M_3$) pour fonctionner en génératrice asynchrone.

7. Convertisseur électromécanique selon la revendication 1, caractérisé en ce que le corps (4) comporte des bobinages connectés entre eux, de manière à créer des champs magnétiques radiaux de déplacement tangentiel pour permettre un fonctionnement du convertisseur en cascade hyposynchrone.

8. Convertisseur électromécanique selon l'une des revendications 1 à 4, caractérisé en ce que les moyens (M) sont associés à un corps (4) encoché et muni d'aimants permanents et/ou des bobinages, assurant une polarisation magnétique pour réaliser une fonction de couplage électromagnétique synchrone.

9. Convertisseur électromécanique selon les revendications 1 à 4 et 8, caractérisé en ce que les moyens électromagnétiques sont associés à un corps (4) réalisé en un matériau ferromagnétique conducteur encoché, pour assurer une fonction de moteur asynchrone synchronisé.

10. Convertisseur électromécanique selon l'une des revendications 1 et 7 à 9, caractérisé en ce que la surface externe du corps mobile (4) est lisse et sa surface intérieure encochée ou inversement pour assurer un couplage synchrone sur un axe et asynchrone sur les deux autres axes ou réciproquement.

## Claims

1. Electromagnetic converter with three degrees of freedom, including body (4) with a spherical surface, structure (6) independent of the body but associated with it by means (5) allowing relative rotary movement on three axes around the center of the sperical body, electromagnetic means (M) interposed between the body and structure including independent field coils assembled together and acting on a single armature by application to the armature of a set of crossed fluxes to cause relative rotation between the spherical body and structure on three independent axes (A), said rotation being total and reversible on one axis and partial and reversible on the two others, in which the electromagnetic means consists of three independent field coils ($M_1$, $M_2$, $M_3$) corresponding to the three axes of rotation ($A_1$, $A_2$, $A_3$) respectively.

2. Electromagnetic converter as claimed in claim 1, in which the electromagnetic means ($M_1$ to $M_3$) are all located outside the spherical body.

3. Electromagnetic converter as claimed by claim 1, in which the electromagnetic means ($M_1$ to $M_3$) are all located inside the spherical body.

4. Electromagnetic converter as claimed in claim 1, in which the electromagnetic means (M) are located both outside and inside body (4) while remaining mechanically and electromagnetically integral.

5. Electromagnetic converter as claimed in one of claims 1 to 4, in which the axis of rotation corresponding to each electromagnetic means (M) is associated with a position sensor (11).

6. Electromagnetic converter as claimed in one of claims 1 to 4, which includes a system contributing reactive power including, for instance, capacitors connected electrically to the terminals of electromagnetic means ($M_1$ to $M_3$) to operate as asynchronous generator.

7. Electromagnetic converter as claimed in claim 1, in which body (4) includes interconnected windings such as to create radial magnetic fields moving tangentially to allow operation of the converter as hyposynchronous cascade.

8. Electromagnetic converter as claimed in one of claims 1 to 4, in which means (M) associated with body (4) said body being slotted and fitted with permanent magnets and/or windings ensuring magnetic polarization to perform a synchronous electromagnetic coupling function.

9. Electromagnetic converter as claimed in claims 1 to 4 and 8, in which the electromagnetic means are associated with body (4) made of slotted, conductive ferromagnetic material to perform as synchronized asynchronous motor.

10. Electromagnetic converter as claimed in one of claims 1 and 7 to 9, in which the external surface of moving body (4) is smooth and the internal surface slotted or vice versa to ensure synchronous coupling on one axis and asynchronous coupling on the two other axes or vice versa.

**Patentansprüche**

1. Elektromagnetischer Momentengeber mit drei Freiheitsgraden, bestehend aus einem Körper (4) mit einer kugelförmigen Fläche, aus einer von dem Körper unabhängigen Struktur (6), die jedoch mit dieser Struktur über Mittel (5) verbunden ist, die eine relative Drehbewegung auf drei Achsen um das Zentrum des sphärischen Körpers ermöglichen, aus zwischen dem Körper und der Struktur angeordneten elektromagnetischen Mitteln (M), die aus unabhängigen jedoch mitwirkenden Feldwicklungen bestehen, wobei diese Feldwicklungen einen einzigen Anker durch Auferlegung eines Feldes gekreuzter Magnetflüsse beeinflussen, um, auf drei unabhängigen Achsen (A), eine relative, vollständige und umkehrbare Drehbewegung um eine Achse und eine teilweise und umkehrbare Drehbewegung um die zwei anderen Achsen, zwischen dem Körper und der Struktur, zu bewirken, dadurch gekennzeichnet, daß die elektromagnetischen Mittel aus drei unabhängigen Feldwicklungen ($M_1$, $M_2$, $M_3$) bestehen, die bzw. den drei Drehachsen ($A_1$, $A_2$, $A_3$) entsprechen.

2. Elektromagnetischer Momentengeber nach Anspruch 1, dadurch gekennzeichnet, daß die elektromagnetischen Mittel ($M_1$ bis $M_3$) alle ausserhalb des kugelförmigen Körpers angeordnet sind.

3. Elektromagnetischer Momentengeber nach Anspruch 1, dadurch gekennzeichnet, daß die elektromagnetischen Mittel ($M_1$ bis $M_3$) alle innerhalb des kugelförmigen Körpers angeordnet sind.

4. Elektromagnetischer Momentengeber nach Anspruch 1, dadurch gekennzeichnet, daß die elektromagnetischen Mittel (M) gleichzeitig innerhalb und ausserhalb des kugelförmigen Körpers unter Beibehaltung deren mechanischen und elektromechanischen Kopplung angeordnet sind.

5. Elektromagnetischer Momentengeber nach einem beliebigen Anspruch 1 bis 4, dadurch gekennzeichnet, daß die jedem elektromagnetischen Mittel (M) zugewiesene Achse mit einem Winkelgeber (11) gekoppelt ist.

6. Elektromagnetischer Momentengeber nach einem beliebigen Anspruch 1 bis 4, dadurch gekennzeichnet, daß er mit einer Blindleistung erzeugenden Vorrichtung versehen ist, die z. B. aus mit den elektromagnetischen Mitteln ($M_1$ bis $M_3$) leitend verbundenen Kondensatoren besteht, um als asynchroner Stromgenerator betrieben zu werden.

7. Elektromagnetischer Momentengeber nach Anspruch 1, dadurch gekennzeichnet, daß der Körper (4) mit untereinander angeschlossenen Wicklungen zur Erzeugung von quergerichteten, dem Wert der Tangentialversetzung entsprechenden Magnetfeldern versehen ist, um den Betrieb des Momentengebers als untersynchrone Kaskade zu ermöglichen.

8. Elektromagnetischer Momentengeber nach einem beliebigen Anspruch 1 bis 4, dadurch gekennzeichnet, daß die elektromagnetischen Mittel (M) mit einem Körper (4) mitwirken, der mit Nuten und Permanentmagneten und/oder Wicklungen für die Erzeugung einer magnetische Polarisation versehen ist, um eine synchrone elektromagnetische Kopplungsfunktion zu bewirken.

9. Elektromagnetischer Momentengeber nach einem beliebigen Anspruch 1 bis 4 und 8, dadurch gekennzeichnet, daß die elektromagnetischen Mittel (M) mit einem Körper (4) mitwirken, der aus einem mit Nuten versehenen leitenden ferromagnetischen Werkstoff hergestellt ist, um die Funktion eines synchronisierten Asynchronmotors zu bewirken.

10. Elektromagnetischer Momentengeber nach einem beliebigen Anspruch 1 und 7 bis 9, dadurch gekennzeichnet, daß die äussere Fläche des beweglichen Körpers (4) glatt ausgeführt und die innere Fläche mit Nuten versehen ist oder umgekehrt, um eine synchrone Kopplung auf einer Achse und eine asynchrone Kopplung auf den zwei anderen Achsen oder umgekehrt zu bewirken.

Fig 1

Fig 2

Fig 3

Fig 6

Fig 7

Fig-4

$M_2$

1

$M_3$

4

$A_3$

$A_1$

$A_2$

$M_1$

8

10

V

V

Fig-5

10

$M_3$

$A_1$

1

0

$A_3$

4

Fig. 9

Fig. 8

Fig. 10